(19) Europäisches Patentamt
European Patent Office
Office européen des brevets

(11) Numéro de publication : **0 160 612 B1**

# (12) FASCICULE DE BREVET EUROPÉEN

(45) Date de publication du fascicule du brevet : **11.10.89**

(51) Int. Cl.[4] : **A 01 B 29/04**, A 01 B 33/08

(21) Numéro de dépôt : **85440027.2**

(22) Date de dépôt : **29.04.85**

## (54) Machine agricole de travail du sol perfectionnée.

(30) Priorité : **02.05.84 FR 8407173**
**06.02.85 FR 8501748**

(43) Date de publication de la demande :
**06.11.85 Bulletin 85/45**

(45) Mention de la délivrance du brevet :
**11.10.89 Bulletin 89/41**

(84) Etats contractants désignés :
**DE GB IT NL**

(56) Documents cités :
**EP-A- 0 091 878**
**DE-C- 268 903**
**FR-A- 2 349 265**
**FR-A- 2 533 406**
**GB-A- 1 264 674**
**US-A- 250 199**

(73) Titulaire : **KUHN S.A.**
**4, Impasse des Fabriques**
**F-67700 Saverne (FR)**

(72) Inventeur : **Klein, Jean**
**19, rue du Herrenstein Dossenheim-Sur-Zinsel**
**F-67330 Bouxwiller (FR)**

EP 0 160 612 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne les machines agricoles de travail du sol équipées d'un rouleau comportant une âme centrale munie de saillies dirigées vers l'extérieur et disposées suivant des couronnes entre lesquelles sont agencés des organes racleurs.

Une telle machine est décrite dans la US-A-250 199.

Les rouleaux qui équipent ces machines, sont particulièrement adaptés pour travailler dans des types de terrain très variés. Les organes racleurs disposés entre les couronnes formées par les saillies, ont pour fonction de racler la terre qui adhère à l'âme centrale du rouleau.

En pratique, il s'est cependant avéré que les organes racleurs ne pouvaient pas décoller de manière satisfaisante, dans toutes les conditions, la terre qui adhère à l'âme centrale du rouleau.

Ce mauvais décrottage est essentiellement dû aux défauts géométriques de l'âme centrale du rouleau et aux raccords existant entre les couronnes de saillies et l'âme centrale du rouleau, tels que cordons de soudure par exemple. En effet, compte tenu de ces défauts géométriques et de ces raccords, l'extrémité des organes racleurs s'éloigne d'une part de l'âme centrale en certains endroits de celle-ci lors de la rotation du rouleau, et ne peut d'autre part s'étendre jusque dans l'angle formé par les couronnes de saillies et l'âme centrale.

Il en résulte qu'en certains endroits du rouleau, les organes racleurs sont incapables de racler la terre qui y adhère. Ces accumulations de terre augmentent continuellement de volume. En sus, elles deviennent très dures du fait qu'elles sont collées sur une surface dure et que leurs passages successifs au droit des organes racleurs les lissent. Cette augmentation du volume et de la dureté de ces accumulations de terre entraîne le blocage de la rotation du rouleau qui glisse alors sur le sol sans rouler et racle le sol à la manière d'une lame niveleuse. A ce stade, l'utilisateur ne peut plus poursuivre son travail mais doit d'abord éloigner les accumulations de terre qui adhèrent au rouleau et étaler la masse de terre que le rouleau a raclée pendant son glissement.

Il est évident, si ces arrêts sont trop fréquents, qu'ils occasionnent une perte de temps considérable qui est d'autant plus importante lorsque la machine agricole est combinée avec un autre appareil, tel qu'un semoir par exemple. Dans ce cas en effet, l'accès au rouleau n'est pas aisé.

Le but de la présente invention est de remédier aux inconvénients des machines de l'art antérieur.

Dans ce but, la machine agricole de travail du sol selon la présente invention est caractérisée par le fait qu'entre deux couronnes de saillies voisines, l'âme centrale comporte une enveloppe déformable.

Grâce à l'invention, la terre adhérant à l'enveloppe déformable que comporte l'âme centrale du rouleau, peut être bien raclée par les organes racleurs. En effet, pendant le travail, l'endroit de l'enveloppe déformable qui est en contact avec le sol, se déforme sous la force exercée par le rouleau. Lorsque cet endroit n'est plus en contact avec le sol, il reprend sa forme initiale et pousse sur la terre qui est arrivée à y adhérer. Cette détente de l'endroit de l'enveloppe qui a été déformé, provoque dans un premier temps, la fissuration de l'accumulation de terre qui s'est formée, et dans un deuxième temps amène cette accumulation de terre fissurée dans la zone d'action des organes racleurs qui forcent alors cette terre à retomber sur le sol. Il faut remarquer que ce phénomène se réalise au milieu de l'enveloppe déformable tout comme près des saillies.

Comme les enveloppes que comporte l'âme centrale du rouleau, sont déformables, les organes racleurs peuvent s'approcher très près de celles-ci. Il est donc possible, dans ce cas, de réduire l'ampleur du phénomène d'éloignement et de rapprochement des extrémités des organes racleurs de l'âme centrale du rouleau. De plus, les organes racleurs ne peuvent pas faire augmenter la dureté des accumulations de terre car celles-ci ne sont pas en contact avec une surface dure.

Il résulte de cette action qu'il n'apparaît plus d'accumulations de terre sur l'âme centrale du rouleau, ni dans l'angle formé par ladite âme centrale et les saillies, ni dans la partie médiane entre deux couronnes de saillies.

De cette sorte, les arrêts fréquents que nécessitaient les rouleaux de l'art antérieur, sont supprimés. Il en résulte un gain de temps substantiel pour l'utilisateur.

D'autres caractéristiques et avantages de l'invention apparaîtront ci-après plus en détail dans la description suivante de quelques exemples non limitatifs de réalisation de l'invention en référence au dessin annexé sur lequel :

— La figure 1 représente une vue latérale d'une machine agricole selon l'invention,

— La figure 2 représente une vue en coupe d'un premier exemple de réalisation d'un rouleau équipant la machine selon l'invention,

— La figure 3 représente une vue en coupe d'un deuxième exemple de réalisation d'un rouleau équipant la machine selon l'invention,

— La figure 4 représente une vue en coupe d'un troisième exemple de réalisation d'un rouleau équipant la machine selon l'invention,

— La figure 5 représente une vue en coupe d'un quatrième exemple de réalisation d'un rouleau équipant la machine selon l'invention,

— La figure 6 représente une vue en coupe suivant le plan VI du rouleau de la figure 5,

— La figure 7 représente une vue en coupe d'un cinquième exemple de réalisation d'un rouleau équipant la machine selon l'invention,

— La figure 8 représente une vue en coupe suivant le plan VIII du rouleau de la figure 7,

— La figure 9 représente une vue en coupe d'un sixième exemple de réalisation d'un rouleau équipant la machine selon l'invention,

— La figure 10 représente une vue en coupe suivant le plan X du rouleau de la figure 9,

— La figure 11 représente une vue en coupe d'un septième exemple de réalisation d'un rouleau équipant la machine selon l'invention,

— La figure 12 représente une vue en coupe suivant le plan XII du rouleau de la figure 11,

— La figure 13 représente une vue en coupe d'un huitième exemple de réalisation d'un rouleau équipant la machine selon l'invention,

— La figure 14 représente une vue en coupe suivant le plan XIV du rouleau de la figure 13,

— La figure 15 représente une vue en coupe suivant les plans XV et XV', d'un neuvième exemple de réalisation d'un rouleau équipant la machine selon l'invention,

— La figure 16 représente une vue en coupe suivant le plan XVI, du rouleau de la figure 15,

— La figure 17 représente une vue en coupe suivant le plan XVII, du rouleau de la figure 15,

— La figure 18 représente à une échelle agrandie, une vue partielle en coupe suivant le plan XVIII, d'un autre mode de réalisation du rouleau de la figure 15, et

— La figure 19 représente à une échelle agrandie en vue en coupe suivant le plan XV' ou le plan XIX de l'agencement des différents organes dans le voisinage d'une couronne.

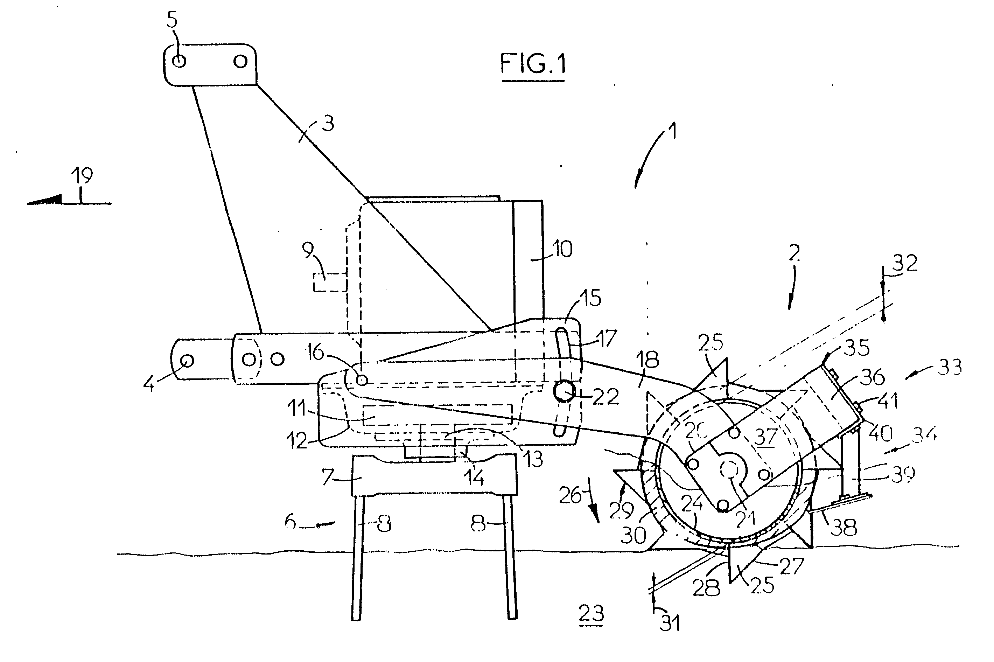

Sur la figure 1, on voit une machine agricole (1) de travail du sol équipée d'un rouleau (2). La machine agricole (1) est dans l'exemple décrit, sans toutefois que ceci soit limitatif, une herse rotative. Pendant le travail, cette dernière est attelée à un tracteur non représenté par l'intermédiaire d'un cadre (3) comportant trois points d'accrochage, deux points inférieurs (4) et un point supérieur (5). La machine agricole (1) comporte des rotors (6) constitués par un support d'outils (7) muni d'outils (8). Les rotors (6) tournent autour d'axes dirigés vers le haut. Leur entraînement en rotation se fait à partir du tracteur par l'intermédiaire d'un arbre à joints universels non représenté, qui attaque l'arbre d'entrée (9) d'une boîte de vitesses (10).

D'une manière connue, la boîte de vitesses (10) transmet le mouvement à une cascade de roues dentées (11) logée dans la poutre-caisson (12). Il est à noter que grâce à la boîte de vitesses (10), la cascade de roues dentées (11) peut être entraînée à plusieurs vitesses de rotation différentes. Chaque roue dentée (11) est solidaire d'un arbre (13) qui est guidé dans un palier (14) fixé sur le fond de la poutre-caisson (12). L'extrémité inférieure de chaque arbre (13) qui s'étend en dehors du palier (14), est solidaire d'un rotor (6). Les roues dentées (11) de deux rotors (6) voisins sont en prise directe de sorte que ces deux rotors (6) soient contrarotatifs. A chaque extrémité de la poutre-caisson (12) est soudée une plaque (15) qui supporte un tourillon d'articulation (16) s'étendant à l'avant de la plaque (15), et qui comporte un trou oblong (17). Le trou oblong (17) est une portion de cercle dont le centre est sensiblement situé sur l'axe du tourillon d'articulation (16). A chaque tourillon d'articulation (16) est relié un bras (18) qui s'étend vers l'arrière eu égard du sens d'avance (19) de la machine pendant le travail. A son extrémité arrière, chaque bras (18) est muni d'un palier (20). De cette sorte, le rouleau (2) peut, grâce à des tourillons (21), être monté rotatif entre les extrémités arrière des bras (18).

Entre le tourillon d'articulation (16) et l'extrémité arrière, chaque bras (18) comporte un boulon (22). Ce boulon (22) traverse également le trou oblong (17) aménagé dans la plaque (15). Grâce à ces moyens, la position du rouleau (2) peut être modifiée par rapport à la poutre-caisson (12), donc par rapport aux outils (8) qui sont supportés par ladite poutre-caisson comme dit plus haut. Pour ce faire, on débloque chaque boulon (22), puis on fait pivoter le bras (18) correspondant autour de son tourillon d'articulation (16) de l'angle désiré, et on rebloque le boulon (22). Cette possibilité de réglage de la position du rouleau (2) par rapport aux outils (8) permet d'adapter la profondeur de travail des outils (8) en fonction de la nature des terrains et des travaux à effectuer, puisque c'est principalement par l'intermédiaire du rouleau (2) que la machine agricole (1) s'appuie sur le sol (23).

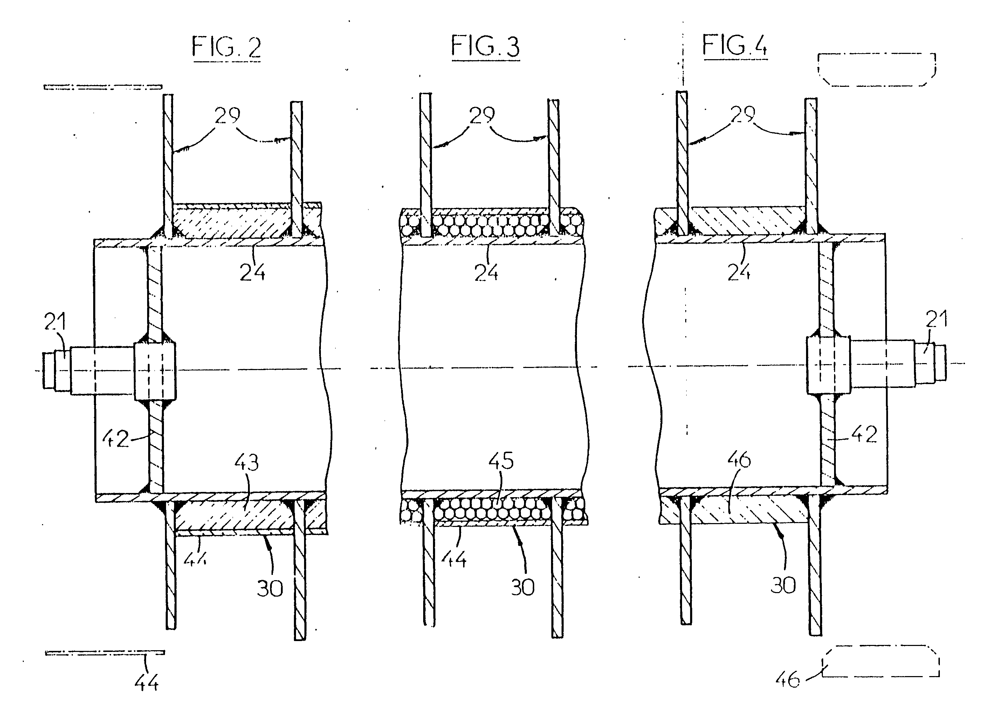

Le rouleau (2) comporte une âme centrale (24) munie de saillies (25) dirigées vers l'extérieur. Une première fonction de ces saillies (25) est d'entraîner le rouleau (2) en rotation à partir du sol (23) lorsque le tracteur auquel est attelée la machine agricole, tire celle-ci dans le sens d'avance (19). A cet effet, chaque saillie (25) comporte, compte tenu du sens de rotation (26) du rouleau (2), d'abord une face (27) qui permet à la saillie (25) de pénétrer aisément dans le sol (23), puis une face (28) agressive qui permet d'entraîner efficacement le rouleau (2) en rotation. Les saillies (25) peuvent avoir la face avant (27) et la face arrière (28) de la même épaisseur (figures 2-14).

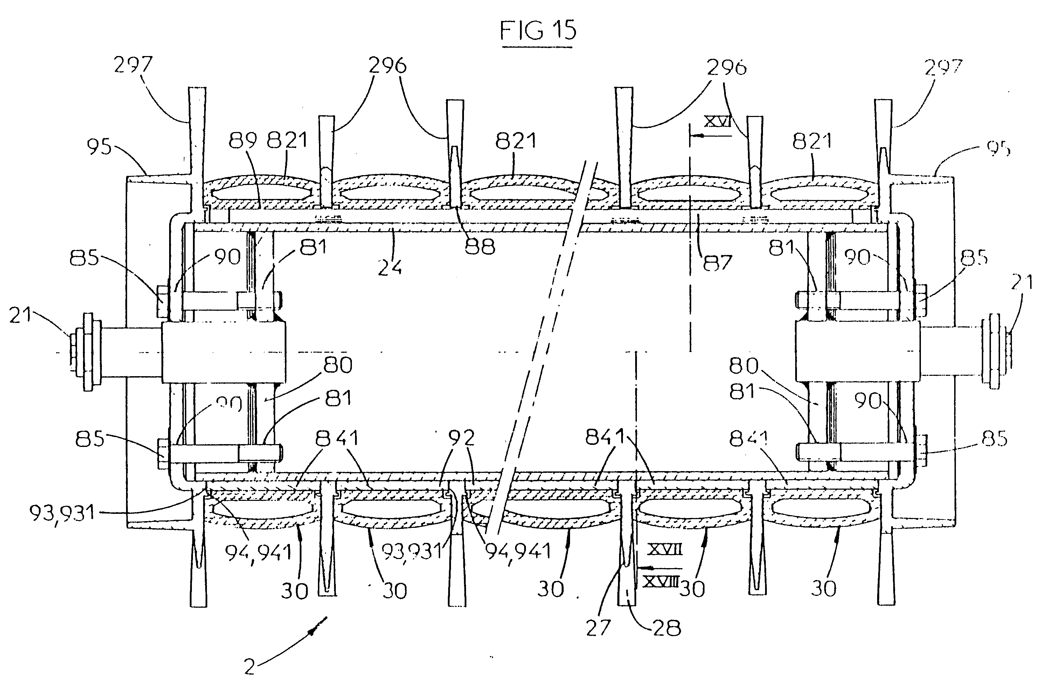

Dans une autre forme de réalisation cependant, la face avant (27) peut être plus mince que la face arrière (28) (figures 15-19). Ceci permet à la face avant de pénétrer plus aisément dans le sol (23) et à la face arrière d'être très agressive. L'autre fonction des saillies (25) est d'entailler la surface du sol qui est tassée par le rouleau. Ces saillies (25) sont disposées autour de l'âme centrale (24) suivant des couronnes (29) (voir figures suivantes).

Entre deux couronnes (29) voisines, l'âme centrale (24) est, selon l'invention, entourée par une enveloppe déformable (30). Comme visible sur la figure 1, au niveau du sol (23), l'enveloppe (30) est déformée et a une épaisseur (31) nettement plus faible que son épaisseur libre (32).

Le rouleau (2) est par ailleurs muni d'un dispositif de décrottage (33). Ce dispositif de décrottage (33) comporte un certain nombre d'organes racleurs (34) montés sur un support (35). Le support (35) est constitué par une traverse (36) sensiblement parallèle à l'axe longitudinal du rouleau (2), qui comporte à chacune de ses extrémités une patte (37) par l'intermédiaire desquelles le support (35) est fixé sur les bras (18). Chaque organe racleur (34) comporte un élément de raclage (38) qui est fixé à l'extrémité d'un bras (39). Le bras (39) est solidaire à son autre extrémité, d'une cornière (40) par l'intermédiaire de laquelle l'organe racleur (34) peut être fixé sur la traverse (36) au moyen de vis (41) par exemple. L'élément de raclage (38) est de préférence fixé sur le bras (39) de manière que sa positin relative par rapport à l'enveloppe déformable (30) puisse être réglée. Il y a lieu de noter que plusieurs bras (39) peuvent être fixés sur une même cornière (40).

La machine agricole qui vient d'être décrite fonctionne de la manière suivante.

Le tracteur auquel la machine agricole (1) est attelée tire celle-ci dans le sens de la flèche (19). Grâce à l'arbre de transmission qui attaque l'arbre d'entrée (9) de la boîte de vitesses (10), les rotors (6) sont entraînés en rotation autour de l'axe de leur arbre (13) respectif. Comme deux rotors (6) voisins sont contrarotatifs, les outils (8) réalisent un important ameublissement du sol (23). Le rouleau (2) qui est placé dans le voisinage des rotors (6), réalise alors un retassement de la terre, préalablement travaillée par les outils (8).

Compte tenu de la force exercée par le rouleau (2) sur le sol (23), l'enveloppe (30) se déforme à l'endroit où elle touche le sol (23). Lorsque la partie de l'enveloppe (30) qui a été déformée, s'éloigne du sol (23), il n'y a plus de force qui s'exerce sur ladite partie de l'enveloppe (30). Celle-ci peut alors à nouveau se détendre et reprendre sa forme normale, c'est-à-dire son épaisseur libre (32). Si une accumulation de terre s'est formée au milieu de l'enveloppe (30) ou dans l'angle formé par les couronnes (29) et ladite enveloppe (30), la partie de l'enveloppe (30) qui avait été déformée, pousse lors de sa détente lesdites accumulations de terre dans la zone d'action des éléments de raclage (38). Lesdits éléments de raclage (38) forcent alors ces accumulations de terre à retomber sur le sol (23) derrière le rouleau (2).

Par ailleurs, comme les accumulations de terre ne se font pas sur une surface dure non déformable, elles ne peuvent donc pas durcir et se développer.

En conséquence, le rouleau équipant la machine agricole selon l'invention, reste relativement propre et est sensiblement invulnérable aux bourrages.

Les figures 2 à 19 montrent différents exemples de réalisation de rouleaux (2) de machines agricoles selon l'invention.

Sur les figures 2, 3, 4, 5 et 6, l'âme centrale (24) est formée par un tube sensiblement cylindrique. A chaque extrémité, le tube comporte un flasque (42) qui est de préférence plein, de sorte à boucher l'extrémité correspondante du tube. La terre ne peut ainsi pas entrer à l'intérieur du tube. Sensiblement en son centre, chaque flasque (42) supporte le tourillon (21) dont la fonction a été décrite plus haut. Sur la surface extérieure de l'âme centrale (24) on a fixé par soudure les saillies (25) suivant des couronnes (29) de préférence régulièrement espacées les unes des autres. Entre deux couronnes (29) voisines s'étend l'enveloppe déformable (30). Sur la figure 2, celle-ci est formée par une bande (43) en matière souple qui est enroulée autour de l'âme centrale (24) et qui est maintenue en place par un bracelet élastique (44). La bande (43) de matière souple est obtenue en découpant dans une longue bande, la longueur nécessaire pour entourer l'âme centrale (24). Le bracelet élastique (44) est réalisé en une seule pièce et est extensible, de sorte qu'on puisse le passer par-dessus les couronnes (29) de saillies (25). (Le bracelet (44) étiré pour passer par-dessus les saillies (25) est représenté en traits mixtes). Après rétraction, le bracelet (44) maintient les deux bouts de la bande (43) sensiblement jointifs, de sorte que l'enveloppe (30) présente une surface extérieure sensiblement continue et cylindrique.

Sur la figure 3, l'enveloppe (30) est formée par un cordon (45) en matière souple qui est enroulé autour de l'âme centrale (24) de manière non limitative sur deux couches et qui est maintenu en place par un bracelet élastique (44) semblable au bracelet élastique (44) de la figure 2. Le cordon (45) en matière souple est obtenu en découpant dans un long cordon, la longueur nécessaire pour entourer l'âme centrale (24) du nombre de couches désiré.

De préférence, le diamètre intérieur des bracelets (44) non étirés est plus petit que le diamètre extérieur de la bande (43) ou de l'enroulement de cordon (45) qui entourent l'âme centrale (24). De cette sorte, les bracelets (44) ne peuvent pas se rétracter complètement et entourent la bande (43) ou l'enroulement de cordon (45) avec une certaine pression. Cela leur permet de mieux maintenir la bande (43) ou le cordon (45).

Sur la figure 4, l'enveloppe (30) est formée par un bandage (46) en matière souple. Ce bandage (46) est en une seule pièce et est suffisamment extensible pour qu'on puisse le faire passer par-dessus les saillies (25). (Le bandage (46) étiré est représenté en traits mixtes). De préférence, le diamètre intérieur du bandage (46) non étiré est plus petit que le diamètre extérieur de l'âme centrale (24), de sorte qu'après rétraction, le bandage (46) entoure l'âme centrale (24) avec une certaine pression.

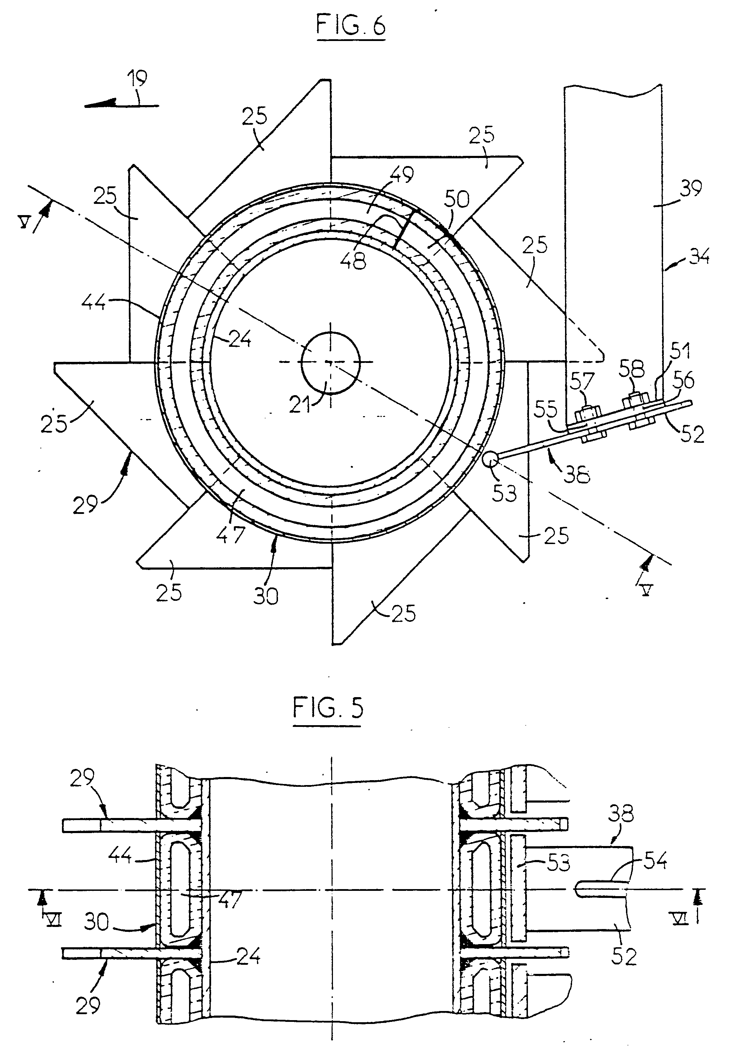

Sur les figures 5 et 6, l'enveloppe (30) est formée par un anneau creux (47). La souplesse de cette enveloppe est donnée d'une part par le fait que l'anneau (47) est en matière souple mais surtout par le fait que l'anneau est creux. L'anneau creux (47) est fendu suivant un plan (48), de sorte que l'anneau qui est normalement sensiblement circulaire puisse être déformé en écartant les deux branches (49, 50) pour le faire passer autour de l'âme centrale (24). Après déformation, l'anneau (47) reprend sa forme, c'est-à-dire que les deux branches (49, 50) redeviennent sensiblement jointives. Pour éviter que les deux branches (49, 50) ne s'écartent l'une de l'autre pendant le travail, un bracelet (44) semblable à celui des figures 2 et 3 entoure l'anneau creux (47) et maintient les deux branches (49, 50) jointives. Il est bien sûr possible, dans le cadre de l'invention, que l'anneau creux soit en plusieurs parties, c'est-à-dire qu'il peut être fendu en plusieurs endroits, de sorte que les différentes parties mises bout à bout, reformeront un anneau complet.

Derrière le rouleau, compte tenu de la flèche (19) s'étendent les organes racleurs (34) dont un seul est représenté sur les figures 5 et 6. L'organe racleur (34) est muni de l'élément de raclage (38) fixé à la partie inférieure du bras (39) qui comporte à cet effet une plaque (51). L'élément de raclage (38) est formé par une plaquette (52) qui comporte à son extrémité s'étendant dans le voisinage de l'enveloppe (30), un bout de fer rond (53). La fonction de ce bout de fer rond (53) est d'une part de diminuer l'agressivité de l'extrémité de la plaquette (52), de sorte que l'enveloppe (30) ne puisse pas être usée prématurément par la plaquette (52), et d'autre part de participer au raclage des accumulations de terre qui se sont formées sur l'enveloppe (30).

Comme visible sur la figure 5, le bout de fer rond (53) est plus large que la plaquette (52) et s'étend jusque dans les angles formés par les faces latérales des couronnes (29) et l'enveloppe (30). Il suffit en effet de racler la terre qui s'est logée dans lesdits angles pour éviter que les accumulations ne progressent le long desdites faces latérales des couronnes (29).

En travail normal, il n'est pas nécessaire que l'extrémité de l'élément de raclage (38) touche l'enveloppe (30). Comme dit plus haut, la position de l'élément de raclage (38) est réglable par rapport à l'enveloppe (30). Pour ce faire, la plaquette (52) comporte un trou oblong (54) qui s'étend suivant l'axe longitudinal de ladite plaquette, alors que la plaque (51) comporte par exemple deux trous (55, 56). La liaison entre la plaquette (52) et la plaque (51) se fait au moyen de deux boulons (57, 58) qui traversent simultanément le trou oblong (54) et les trous (55, 56). Après desserrage des boulons (57 et 58), l'extrémité de l'élément de raclage (38) s'étendant dans le voisinage de l'enveloppe (30), peut donc être plus ou moins rapprochée ou éloignée de ladite enveloppe (30).

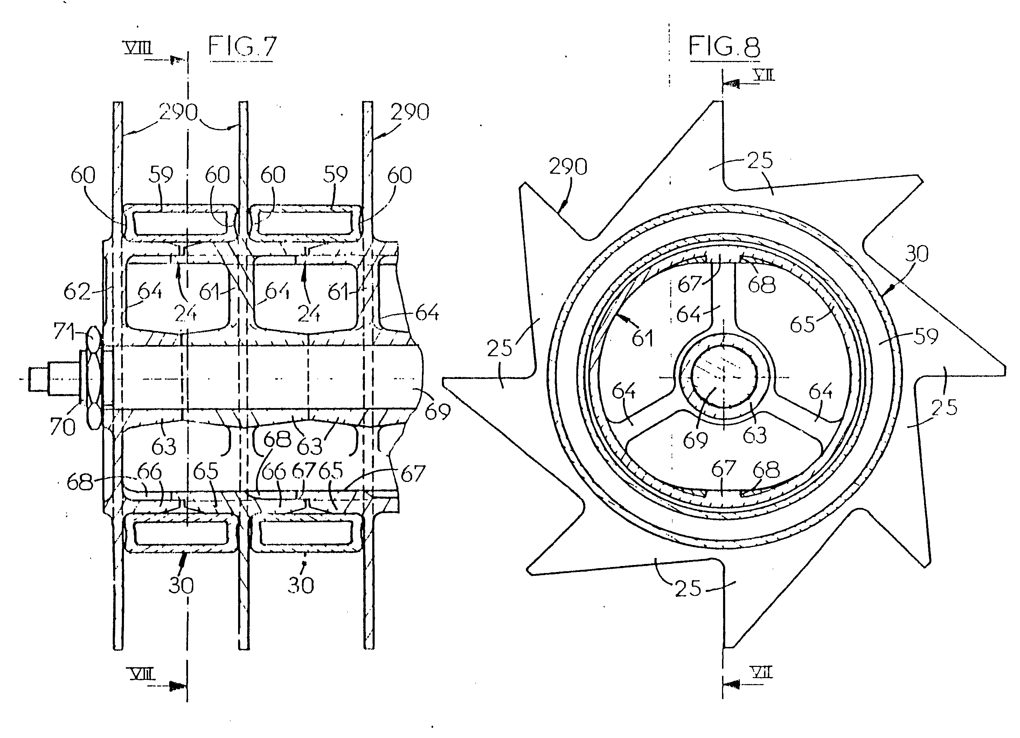

Sur les figures 7 et 8, les enveloppes (30) sont formées par les anneaux creux (59) réalisés d'une seule pièce. Pour augmenter la souplesse desdits anneaux creux (59) dans le voisinage de leurs bords latéraux, les faces latérales de ceux-ci comportent une gorge (60). Il est ainsi possible d'obtenir une souplesse semblable sensiblement sur toute la largeur de l'anneau creux (59). Comme les anneaux creux (59) sont réalisés en une seule pièce et qu'ils ne sont pas suffisamment extensibles pour passer par-dessus les saillies (25), le rouleau est réalisé à partir d'une pluralité de modules (61, 62) pour permettre le montage des anneaux creux (59) entre les couronnes (290). Les modules (61, 62) sont par exemple obtenus par fonderie. Les modules (61) comportent une couronne (290) de saillies (25) qui est maintenue par rapport au moyen (63) par une certain nombre de branches (64). De part et d'autre de la couronne (290) de saillies (25) s'étendent des portées (65, 66) sur lesquelles sont montés les anneaux creux (59). Le diamètre extérieur des portées (65, 66) est à cet effet sensiblement égal au diamètre intérieur des anneaux creux (59) et de préférence légèrement plus grand.

Avantageusement, chaque portée (65) d'un module (61) est munie d'au moins un tenon (67) qui collabore avec une rainure (68) aménagée dans la portée (66) du module (61, 62) voisin. De cette sorte, la rotation entre les différents modules est condamnée.

Les modules d'extrémité (62) ne comportent qu'une seule portée. Par ailleurs sur ces modules (62), l'espace entre les branches (64) est obturé pour éviter que le rouleau ne se remplisse de terre pendant le travail.

L'ensemble des modules (61, 62) est monté sur un arbre (69) qui traverse les alésages aménagés dans les moyeux (63). Les extrémités de l'arbre (69) ont une forme semblable à celle des tourillons (21) des exemples précédents pour permettre le montage du rouleau dans les paliers (20) des bras (18). Au moins une des extrémités de l'arbre (69) comporte une partie filetée (70) sur laquelle est vissé un écrou (71). A l'autre extrémité, l'arbre (69) comporte une butée non représentée qui sert d'arrêt en translation aux modules. Cette butée peut par exemple être un écrou semblable à l'écrou (71) ou tout autre moyen à la portée de l'homme de l'art.

Le montage du rouleau décrit, s'opère de la manière suivante. On enfile d'abord un module d'extrémité (62) sur l'arbre (69) puis un anneau creux (59), puis un module (61), puis un autre anneau creux (59) et un autre module (61), et ainsi de suite. Lorsque le dernier anneau creux (59) a été monté, on monte alors le deuxième module d'extrémité (62). On visse ensuite l'écrou (71) sur la partie filetée (70) de l'arbre (69), ce qui provoque le placage des différents modules (61, 62) l'un contre l'autre puisqu'à l'autre extrémité de l'arbre (69) le premier module d'extrémité (62) est retenu par la butée aménagée sur l'arbre (69). L'écartement entre les différentes couronnes (290) est déterminé par la longueur des moyeux (63). Avantageusement la distance entre deux couronnes (290) voisines est après serrage, légèrement plus petite que la largeur libre de l'anneau creux (59), de sorte que les faces latérales dudit anneau creux (59) soient bien appliquées contre les couronnes (290). Il est à noter que le serrage de l'écrou (71) entraîne une précontrainte de l'arbre (69), ce qui confère au rouleau monté une très grande rigidité en flexion.

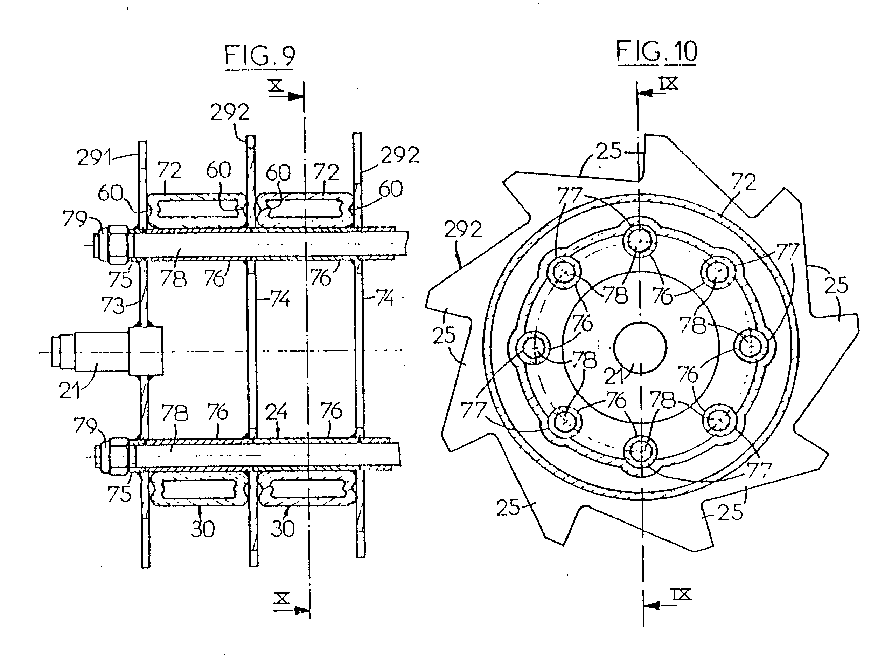

Sur les figures 9 et 10, les enveloppes (30) sont formées par des anneaux creux (72) également réalisés en une seule pièce. Tout comme dans l'exemple précédent, les faces latérales des anneaux creux (72) comportent une gorge (60) qui confère aux bords latéraux des anneaux creux (72) une souplesse semblable à la souplesse qu'ils présentent dans le voisinage du milieu de leur largeur. Pour permettre le montage des anneaux creux (72), le rouleau est formé par une pluralité de modules (73, 74). Le module d'extrémité (73) est constitué par une couronne (291) pleine dont la circonférence comporte les saillies (25). Sensiblement au centre de la couronne (291) s'étend le tourillon (21) qui permet de monter le rouleau dans le palier (20) du bras (18).

A une certaine distance du centre de la couronne (291), on a percé des trous qui sont répartis de préférence concentriquement autour dudit centre. Dans ces trous, on a soudé des petits bouts de tube (75) dont l'axe longitudinal est sensiblement perpendiculaire au plan de la couronne et qui pénètrent dans lesdits trous sensiblement jusqu'à la moitié de l'épaisseur de ladite couronne.

Les modules intermédiaires (74) sont constitués par des couronnes (292) dont la circonférence extérieure comporte les saillies (25). Tout comme dans la couronne (291) du module d'extrémité (73), on a percé des trous tout autour du centre de la couronne (292) à une distance du centre égale à celle à laquelle s'étendent les trous percés dans la couronne (291) du module d'extrémité (73). Dans ces trous, on a soudé des bouts de tube (76) dont l'axe longitudinal est sensiblement perpendiculaire au plan de la couronne (292) et qui pénètrent dans lesdits trous, sensiblement jusqu'à la moitié de l'épaisseur de ladite couronne.

Les bouts de tube (76) d'un module intermédiaire (74) servent de portée à un anneau creux (72). A cet effet, pour que l'anneau creux (72) soit bien supporté par les bouts de tube (76), le diamètre intérieur dudit anneau creux comprend des gorges (77) dont la direction est sensiblement axiale et dont le nombre correspond au nombre de bouts de tube (76). Ces gorges (77) empêchent également dans une certaine mesure l'anneau creux (72) de tourner par rapport au module (74) sur lequel il est monté.

Les différents modules (73, 74) sont supportés par des tirants (78) qui s'étendent à travers les bouts de tube (75, 76). L'une au moins des extrémités des tirants (78) est filetée, tandis que l'autre extrémité des tirants (78) comporte une butée non représentée qui sert d'arrêt en translation au module (74) s'étendant à cette extrémité des tirants (78).

Le montage du rouleau décrit ci-dessus se fait par exemple de la manière suivante. On monte d'abord sur chaque module intermédiaire (74) un anneau creux (72). On enfile ensuite sur les tirants (78) tous les modules intermédiaires (74) munis de leur anneau creux (72) et le module d'extrémité (73). Après ce montage, on visse sur l'extrémité filetée des tirants (78) un écrou (79). Le serrage des écrous (79) provoque le placage des divers modules (73, 74) l'un contre l'autre puisqu'ils sont coincés entre l'écrou (79) et la butée située à l'autre extrémité d'un tirant (78).

Il est à noter que les différents modules (73, 74) sont centrés l'un par rapport à l'autre. En effet, les bouts de tube (76) d'un module (74) peuvent pénétrer dans les trous du module (74) suivant de la moitié de l'épaisseur de la couronne (292) qui constitue le module (74) suivant. De même, les bouts de tube (76) du dernier module (74) peuvent pénétrer dans les trous du module d'extrémité (73) de la moitié de l'épaisseur de la couronne (291) qui constitue le module (73).

L'écartement entre les couronnes (291 et 292) ou entre les couronnes (292) de deux modules adjacents est déterminé par la longueur des bouts de tube (76), lesquels butent contre les bouts de tube du module adjacent lors du serrage. Dans cet exemple de réalisation, la distance entre deux couronnes de saillies (25) voisines est également légèrement plus petite que la largeur libre de l'anneau creux (72).

Après serrage des écroux (79) l'ensemble monté forme un rouleau relativement rigide en flexion.

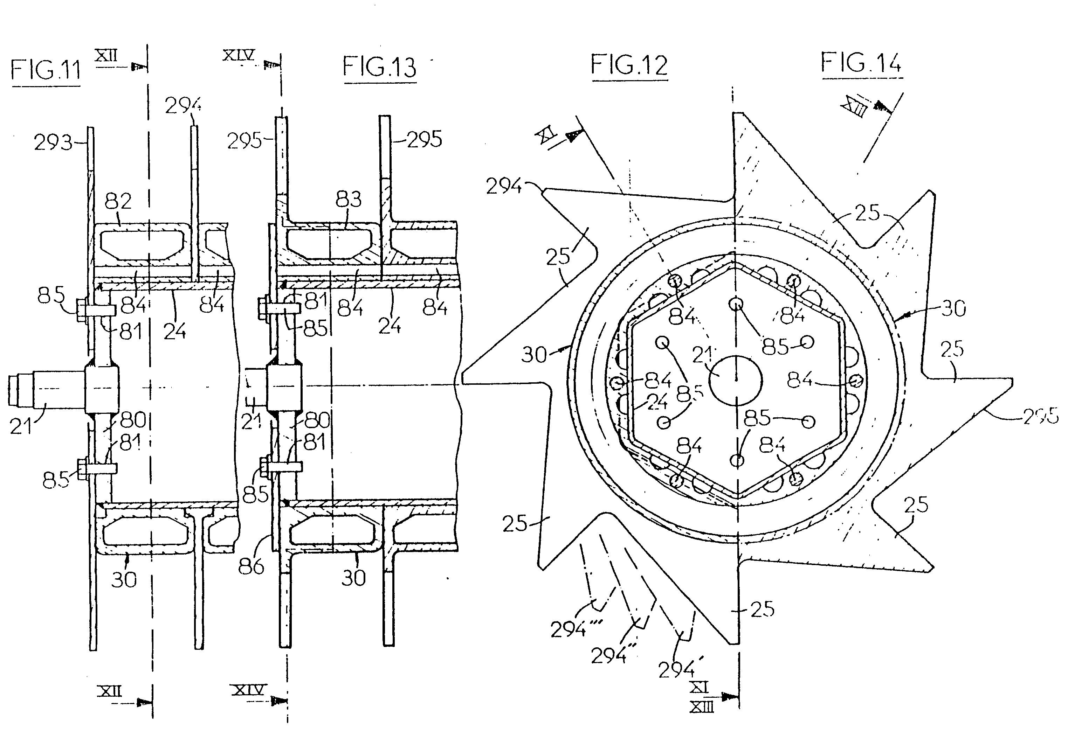

Sur les figures 11, 12, 13 et 14, l'âme centrale (24) du rouleau est obturée à chacune de ses extrémités par un flasque (80) qui y est fixé par soudure par exemple. Sensiblement en son centre, le flasque (80) est munu du tourillon (21). Concentriquement autour du tourillon (21) et à une certaine distance de celui-ci, le flasque (80) comporte un certain nombre de trous filetés (81).

Dans l'exemple de réalisation décrit sur les figures 11 et 12, le rouleau comporte des couronnes d'extrémité (293) et des couronnes intermédiaires (294) entre lesquelles s'étendent les enveloppes qui sont formées par des anneaux creux (82).

Dans l'exemple de réalisation décrit sur les figures 13 et 14, les enveloppes (30) sont formées par des anneaux creux (83) qui sont munis de couronnes (295) de saillies (25). Ces couronnes (295) peuvent être réalisées entièrement avec la même matière que l'anneau creux proprement dit ou comporter des inserts en matière plus dure que la matière de l'anneau creux.

Chaque anneau creux (82, 83) comporte près de sa circonférence intérieure, au moins une entretoise (84) qui est noyée dans la matière de l'anneau creux et qui peut déboucher des faces latérales de l'anneau creux.

Comme visible sur les figures 12 et 14, l'âme centrale (24) a une forme extérieure hexagonale. Cette forme est la forme complémentaire de celle des circonférences intérieures des couronnes (294) et des anneaux creux (82, 83), la circonférence extérieure de ces derniers étant circulaire. Ainsi, les couronnes (294) et les anneaux creux (82) ou les anneaux creux (83) peuvent être glissés sur l'âme centrale (24) mais y sont liés en rotation. Il y a lieu de noter que la forme extérieure de l'âme centrale (24) et de la circonférence intérieure des couronnes (294) et des anneaux creux (82, 83) peut être autre que hexagonale dès lors où elle autorise une translation et procure une liaison en rotation.

Le montage du rouleau des figures 11 et 12 s'effectue de la manière suivante. On glisse sucessivement sur l'âme centrale (24) un anneau creux (82), puis une couronne (294) et ainsi de suite, en terminant par un anneaux creux (82). Une fois cet empilage réalisé, on fixe sur chaque flasque (80), une couronne d'extrémité (293) à l'aide de vis (85) qui traversent des trous prévus dans les couronnes (293) et sont vissées dans les trous filetés (81) aménagés dans les flasques (80). Lors du serrage, on presse les différents anneaux creux (82) et les couronnes intermédiaires (294) l'un contre l'autre. La distance entre deux couronnes voisines est déterminée par la longueur des entretoises (84).

On voit par ailleurs sur la figure 12, qu'il est possible, dans le cadre de l'invention, de décaler angulairement l'une des couronnes de saillies (25) par rapport à ses couronnes adjacentes (294, 294', 294", 294'"...). Ainsi, en décalant régulièrement chaque couronne par rapport à sa précédente, les saillies (25) sont disposées en hélice le long du rouleau, ce qui procure un entraînement en rotation du rouleau plus régulier lors du travail.

Le montage du rouleau des figures 13 et 14 s'opère d'une manière semblable. Après avoir glissé les différents aneaux creux (83) sur l'âme centrale (24), on presse ceux-ci l'un contre l'autre au moyen de deux disques d'extrémité (86). La distance entre les couronnes (295) de saillies (25) est déterminée par les entretoises (84).

Sur les figures 15 à 19, on voit que l'âme centrale (24) du rouleau est formée par un tube qui est obturé à chaque extrémité par un flasque (80) qui y est fixé par soudure. Sensiblement en son centre, chaque flasque (80) supporte un tourillon (21) dont la fonction a été décrite plus haut. Concentriquement autour du tourillon (21) et à une certaine distance de celui-ci, le flasque (80) comporte un certain nombre de trous filetés (81).

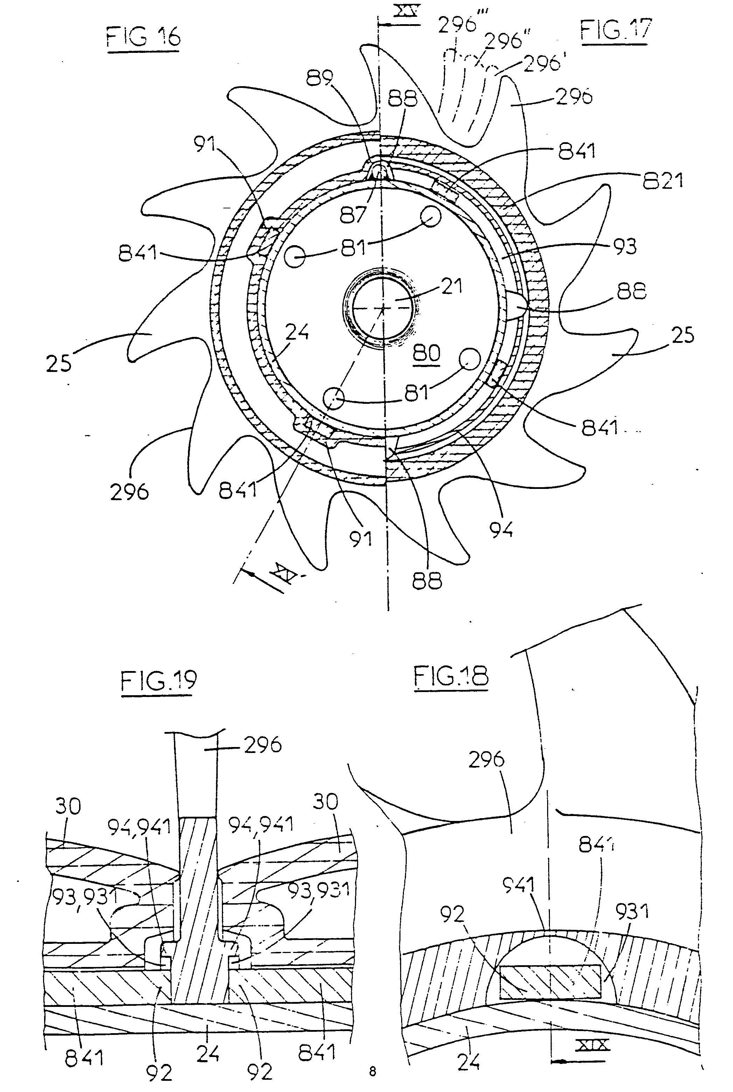

Sur la surface extérieur de l'âme centrale (24), on a fixé par soudure, un longeron (87) qui s'étend dans l'exemple décrit, le long d'une génératrice de la surface extérieure de l'âme centrale (24) qui, dans le cas décrit, est cylindrique. Autour de cette surface extérieure de l'âme centrale (24) s'étendent alternativement des couronnes (296) de saillies (25) et des enveloppes déformables (30), de sorte qu'entre deux couronnes (296) de saillies s'étende une enveloppe déformable (30). Tel que visible sur la figure 17, chaque couronne (296) comporte un certain nombre d'encoches (88) dans l'une desquelles passe le longeron (87). Les couronnes (296) peuvent ainsi être glissées sur l'âme centrale (24) du rouleau, mais y sont liées en rotation. La position et le nombre des encoches (88), de même que la position et le nombre des saillies (25) d'une couronne (296) sont judicieusement choisis les uns par rapport aux autres, de sorte qu'en décalant régulièrement chaque couronne (296) par rapport à sa précédente, les saillies (25) soient disposées en hélice le long du rouleau, ce qui procure un entraînement en rotation du rouleau plus régulier, lors du travail (c'est ce qui a été représenté sur les figures 16 et 17 où on voit en traits mixtes des couronnes (296', 296", 296'")).

De même, on voit sur la figure 16, que l'enveloppe déformable (30) comporte également une encoche (89) dans laquelle passe le longeron (87). Les enveloppes déformables (30) peuvent donc aussi être glissées sur l'âme centrale (24) du rouleau tout en y étant liées en rotation.

Lorsque l'empilage des couronnes (296) de saillies et des enveloppes déformables (30) a été réalisé, on monte à chaque extrémité de l'âme centrale (24) une couronne d'extrémité (297) de saillies (25). Ces couronnes d'extrémité (297) peuvent par exemple être centrées sur les tourillons (21) ou comporter un alésage qui permet le centrage sur la surface extérieure de l'âme centrale (24). Chaque couronne d'extrémité (297) comporte en regard des trous filetés (81) aménagés dans le flasque (80) correspondant, des trous (90) par lesquels passent des vis (85) qui sont vissées dans lesdits trous filetés (81). En serrant les vis (85), les couronnes d'extrémité (297) pressent les différentes enveloppes déformables (30) et couronnes (296) les unes contre les autres.

Afin d'éviter d'écraser les enveloppes déformables (30) pendant le serrage des vis (85), et afin d'obtenir un blocage desdites vis (85), on a disposé entre deux couronnes (296 ; 297) voisines des entretoises (841). Ces entretoises (841) s'étendent dans des logements (91) aménagés dans les enveloppes déformables (30). Ces logements (91) sont ouverts du côté de l'alésage intérieur de l'enveloppe déformable (30), de sorte que les entretoises puissent en être facilement extraites. Avec cette structure des logements (91), on peut aussi monter les entretoises (841) dans les logements (91) après réalisation des enveloppes déformables (30).

Sur la figure 15, on voit encore que les extrémités (92) des entretoises (841) pénètrent dans une cavité (93) aménagée dans les couronnes (296 ; 297). Pour une meilleure compréhension, ceci a été représenté sur la figure 19 à une échelle agrandie.

Avec ce montage, les entretoises (841) sont liées aux couronnes (296 ; 297). Ainsi, si par suite de l'endommagement d'une ou de plusieurs enveloppes déformables (30), il est nécessaire d'enlever lesdites enveloppes déformables endommagées, les entretoises (841) resteront en place car les épaulements (94) des cavités (93) aménagées dans les couronnes (296 ; 297) empêcheront celles-ci de s'enlever. Le blocage des différentes couronnes (296 ; 297) reste ainsi assuré, de sorte qu'il est possible de poursuivre le travail en attendant les enveloppes (30) de rechange.

Dans l'exemple représenté sur la figure 17, on voit que la cavité (93) est circulaire et s'étend sensiblement concentriquement à l'alésage aménagé dans les couronnes (296 ; 297) de saillies et qui permet le montage de celles-ci sur l'âme centrale (24) du rouleau.

Dans l'exemple de la figure 18, on a représenté un autre mode de réalisation de cavité dans laquelle pénètre l'extrémité (92) d'une entretoise (841). Cette cavité (931) a une dimension telle que le jeu entre l'extrémité (92) d'une entretoise (841) et ladite cavité (931) ne soit pas trop important.

Dans l'exemple, elle a une forme demi-circulaire obtenue par fraisage par exemple. Ainsi, lorsque l'enveloppe déformable (30) qui entoure ces entretoises (841) doit être enlevée suite à un endommagement, lesdites entretoises (841) conservent dans tous les cas leur position angulaire respective l'une par rapport à l'autre.

Sur la figure 15, on voit encore que les couronnes d'extrémité (297) sont munies d'une excroissance circulaire (95) qui s'étend vers l'extérieur au-delà des têtes des vis (85). Une des fonctions de ces excroissances (95) est de protéger les têtes des vis (85).

Les différentes enveloppes (30) qui viennent d'être décrites à la lumière des figures 7 à 19 sont constituées par des anneaux creux (59, 72, 82, 821 et 83) réalisés en une seule pièce. Dans le cadre de l'invention, ces différents anneaux pourront par exemple comporter au moins un trou pour que l'air qui est contenu à l'intérieur d'eux, puisse s'en échapper lorsqu'ils sont déformés pendant le travail. On pourra cependant également empêcher le volume d'air enfermé dans les anneaux creux de s'en échapper.

On pourra même dans le cadre de l'invention prévoir des anneaux creux gonflables, de sorte que leur degré de souplesse puisse être choisi en fonction des conditions de travail.

Par ailleurs, il est préférable que le raccord entre deux saillies (25) voisines d'une même couronne se fasse au moins sensiblement au niveau de la surface extérieure des enveloppes (30).

Il y a aussi lieu de noter que diverses combinaisons entre les différents exemples décrits sont possibles dans le cadre de l'invention.

**Revendications**

1. Machine agricole de travail du sol (1) équipée d'un rouleau (2) comportant une âme centrale (24) munie de saillies (25) dirigées vers l'extérieur et disposées suivant des couronnes (29, 290, 291, 292, 293, 294, 295, 296, 297) entre lesquelles sont agencés des organes racleurs (34), caractérisée par le fait qu'entre deux couronnes (29, 290, 291, 292, 293, 294, 295, 296, 297), de saillies (25) voisines, l'âme centrale (24) comporte une enveloppe déformable (30).

2. Machine selon la revendication 1, caractérisée par le fait que le pourtour extérieur de l'enveloppe déformable (30) est sensiblement circulaire.

3. Machine selon la revendication 1 ou 2, caractérisé par le fait que la surface extérieure de l'enveloppe déformable (30) est sensiblement cylindrique.

4. Machine selon l'une des revendications 1 à 3, caractérisée par le fait que l'enveloppe déformable (30) est pleine.

5. Machine selon l'une des revendications 1 à 3, caractérisée par le fait que l'enveloppe déformable (30) est creuse.

6. Machine selon l'une des revendications 4 ou 5, caractérisée par le fait que l'enveloppe déformable (30) est formée par au moins un bandage élastique qui entoure l'âme centrale (24).

7. Machine selon la revendication 6, caractérisée par le fait que le bandage élastique (46) entoure l'âme centrale (24) avec une certaine pression.

8. Machine selon la revendication 4, caractérisée par le fait que l'enveloppe déformable (30) comporte au moins une bande souple (43) enroulée autour de l'âme centrale (24).

9. Machine selon la revendication 4, caractérisée par le fait que l'enveloppe déformable (30) comporte un cordon élastique (45) enroulé autour de l'âme centrale (24), de préférence sur plusieurs couches autour de l'âme centrale (24).

10. Machine selon la revendication 4 ou 5, caractérisée par le fait que l'enveloppe déformable (30) comporte un organe courbe fendu (47), ou plusieurs organes courbes qui mis bout à bout entourent l'âme centrale (24).

11. Machine selon l'une des revendications 8, 9 ou 10, caractérisée par le fait que la bande souple (43), le cordon élastique (45), l'organe courbe fendu (47) ou les organes courbes mis bout à bout, sont maintenus, de préférence avec une certaine pression, par au moins un bracelet élastique (44) après avoir été disposés autour de l'âme centrale (24).

12. Machine selon la revendication 5, caractérisée par le fait que l'enveloppe déformable (30) est constituée par un volume creux fermé en forme d'anneau (59, 72, 82, 821, 83) réalisé en une seule pièce.

13. Machine selon la revendication 12, caractérisée par le fait que l'air contenu dans l'anneau creux (59, 72, 82, 821, 83) puisse s'en échapper lorsque l'anneau est déformé pendant le travail.

14. Machine selon la revendication 12, caractérisée par le fait que l'air contenu dans l'anneau creux (59, 72, 82, 821, 83) ne peut s'en échapper.

15. Machine selon la revendication 12, caractérisée par le fait que l'anneau creux (59, 72, 82, 821, 83) est gonflable.

16. Machine selon l'une des revendications 5, 6, 7, 10, 11, 12, 13, 14 ou 15, caractérisée par le fait que les faces latérales de l'enveloppe déformable (30) creuse ont une forme telle que toute la surface extérieure de l'enveloppe déformable (30) possède sensiblement la même souplesse.

17. Machine selon la revendication 16, caractérisée par le fait que les faces latérales de l'enveloppe déformable (30) comportent au moins une gorge (60).

18. Machine selon l'une des revendications 1 à 7 ou 12 à 17, caractérisée par le fait que le rouleau (2) se compose d'une pluralité de module (61, 62, 73, 74) comportant une couronne (290, 291, 292) de saillies (25) et une portée (65, 66, 76) qui supporte l'enveloppe déformable (30).

19. Machine selon la revendication 18, caractérisée par le fait que chaque portée (76) d'un module (74) est située d'un côté de la couronne (292) de saillies (25).

20. Machine selon la revendication 18, caractérisée par le fait qu'un module (61) comporte une portée (65, 66) de chaque côté de la couronne (290) de saillies (25).

21. Machine selon l'une des revendications 18 à 20, caractérisée par le fait qu'un module (74) se centre dans un de ses modules (73, 74) voisins.

22. Machine selon l'une des revendications 18 à 21, caractérisée par le fait que les différents modules (61, 62, 73, 74) sont montés sur au moins un support (69, 78).

23. Machine selon la revendication 22, caractérisée par le fait que les portées se composent d'une pluralité de tubes (76) traversés par les supports (78).

24. Machine selon l'une des revendications 18 à 23, caractérisée par le fait que les modules (61, 62, 73, 74) sont pressés les uns contre les autres par des organes de pressage tels que les modules d'extrémités (62, 73).

25. Machine selon l'une des revendications 1 à 7 ou 12 à 17, caractérisée par le fait que l'âme centrale (24) a une forme qui permet de glisser sur ladite âme centrale (24) des couronnes (294, 295, 296, 297) de saillies (25) et de lier ces dernières en rotation à ladite âme centrale (24).

26. Machine selon la revendication 25, caractérisée par le fait que les couronnes (293, 294, 296, 297) de saillies (25) et les enveloppes déformables (30) s'étendant entre ces couronnes (293, 294) sont poussées les unes contre les autres.

27. Machine selon la revendication 26, caractérisée par le fait que les enveloppes déformables (30) et les couronnes (294, 296) de saillies (25) sont poussées les unes contre les autres par des organes de pressage tels que les couronnes d'extrémité (293, 297) de saillies (25).

28. Machine selon l'une des revendications précédentes, caractérisée par le fait que l'enveloppe (30) est liée dans une certaine mesure en rotation à l'âme centrale (24).

29. Machine selon les revendications 28 et 25, caractérisée par le fait qu'une couronne (295) de saillies (25) et une enveloppe (30) font partie d'un seul et même anneau (83).

30. Machine selon la revendication 29, caractérisée par le fait que les couronnes (295) sont réalisées au moins partiellement dans une matière plus dure que le reste de l'enveloppe (30).

31. Machine selon l'une des revendications 29 ou 30, caractérisée par le fait que les anneaux (83) sont pressés les uns contre les autres au moyen d'organes de pressage tels que des disques d'extrémité (86).

32. Machine selon la revendication 26, 27 ou 31, caractérisée par le fait que des entretoises (84, 841) s'étendent entre deux couronnes (293, 294, 295, 296 ou 297) de saillies (25) voisines pour déterminer la distance entre lesdites couronnes.

33. Machine selon la revendication 32, caractérisée par le fait que les entretoises (84) sont noyées dans l'enveloppe déformable (30).

34. Machine selon la revendication 32 ou 33, caractérisée par le fait que des moyens de liaison (93, 94 ; 931, 941) maintiennent les entretoises (841) en place indépendament de la présence des enveloppes déformables (30).

35. Machine selon la revendication 34, caractérisée par le fait que lesdits moyens de liaison (93, 94 ; 931, 941) sont agencés entre les entretoises (841) et les couronnes (296) ou les organes de pressage (297), et lient ces entretoises (841) à ces couronnes (296) ou ces organes de pressage (297).

36. Machine selon la revendication 35, caractérisée par le fait que lesdits moyens de liaison (931, 941) sont constitués par des cavités (931) aménagées dans les couronnes (296) et les organes de pressage (297), dans chacune desquelles pénètre une entretoise (841).

37. Machine selon la revendication 36, caractérisée par le fait que la dimension des cavités (931) est telle que le jeu entre la partie (92) de l'entretoise (841) qui y pénètre, et ladite cavité (931) n'est pas trop important.

38. Machine selon la revendication 35, caractérisée par le fait que lesdits moyens de liaison (93, 94) sont constitués par une cavité circulaire (93) qui s'étend sensiblement concentriquement à l'alésage aménagé dans les couronnes (296) et dans les organes de pressage (297), alésages qui permettent le montage desdites couronnes (296) et desdits organes de pressage (297) sur l'âme centrale (24).

39. Machine selon l'une des revendications 34 à 38, caractérisée par le fait que les enveloppes déformables (30) comportent des logements (91) dans lesquels s'étendent les entretoises (841), la structure de ces logements (91) étant telle que les entretoises (841) puissent en être facilement extraites.

40. Machine selon la revendication 39, caractérisée par le fait que la structure des logements (91) est telle que les entretoises (841) peuvent être introduites dans lesdits logements (91) après réalisation des enveloppes déformables (30).

41. Machine selon l'une des revendications 24 ou 32 à 40, caractérisée par le fait qu'après montage, la distance entre deux couronnes (290, 291, 292, 293, 294, 295, 296, 297) de saillies (25) voisines est sensiblement égale à la largeur libre de l'enveloppe déformable (30).

42. Machine selon la revendication 41, caractérisée par le fait que la distance entre deux couronnes (290, 291, 292, 293, 294, 295, 296, 297) voisines est légèrement plus petite que la largeur libre de l'enveloppe déformable (30).

43. Machine selon l'une des revendications 24, 27 ou 31, caractérisée par le fait que les organes de pressage (297) qui sont montés sur l'âme centrale (24) du rouleau (2) à l'aide d'organes de serrage (85), comportent des organes de protection (95) des organes de serrage (85).

44. Machine selon l'une des revendications précédentes, caractérisée par le fait que le bord de l'élément racleur (38) qui s'étend dans le voisinage de l'enveloppe (30) est arrondi.

45. Machine selon l'une des revendications précédentes, caractérisée par le fait que le bord de l'élément racleur (38) qui s'étend dans le voisinage de l'enveloppe (30) est plus large que le reste de l'élément racleur.

46. Machine selon l'une des revendications précédentes, caractérisée par le fait que le bord de l'élément racleur (38) qui s'étend dans le voisinage de l'enveloppe (30), s'étend jusque dans l'angle formé par l'enveloppe (30) et les couronnes de saillies (25).

47. Machine selon l'une des revendications précédentes, caractérisée par le fait que la position de l'élément racleur (38) peut être réglée par rapport à l'enveloppe (30).

**Claims**

1. An agricultural machine (1) for working the soil, equipped with a roller (2) having a central core (24) equipped with projections (25) directed towards the outside and arranged round crowns (29, 290, 291, 292, 293, 294, 295, 296, 297) between which are arranged scraper members (34), characterized by the fact that between two adjacent crowns (29, 290, 291, 292, 293, 294, 295, 296, 297) of projections (25) the central core (24) has a deformable envelope (30).

2. A machine as in Claim 1, characterized by the fact that the outer perimeter of the deformable envelope (30) is substantially circular.

3. A machine as in Claim 1 or 2, characterized by the fact that the outer surface of the deformable envelope (30) is substantially cylindrical.

4. A machine as in one of the Claims 1 to 3, characterized by the fact that the deformable envelope (30) is filled up.

5. A machine as in one of the Claims 1 to 3, characterized by the fact that the deformable envelope (30) is hollow.

6. A machine as in one of the Claims 4 or 5, characterized by the fact that the deformable envelope (30) is formed by at least one elastic bandage which surrounds the central core (24).

7. A machine as in Claim 6, characterized by the fact that the elastic bandage (46) surrounds the central core (24) with a certain pressure.

8. A machine as in Claim 4, characterized by the fact that the deformable envelope (30) includes at least one flexible strip (43) wrapped round the central core (24).

9. A machine as in Claim 4, characterized by the fact that the deformable envelope (30) includes an elastic cord (45) wrapped round the central core (24), preferably over a number of layers round the central core (24).

10. A machine as in Claim 4 or 5, characterized by the fact that the deformable envelope (30) includes a split curved member (47) or a number of curved members which placed end to end surround the central core (24).

11. A machine as in one of the Claims 8, 9 or 10, characterized by the fact that the flexible strip (43), the elastic cord (45), the split curved member (47) or the curved members placed end to end are held, preferably with a certain pressure, by at least one elastic bracelet (44) after having been arranged round the central core (24).

12. A machine as in Claim 5, characterized by the fact that the deformable envelope (30) consists of a closed hollow volume having the form of a ring (59, 72, 82, 821, 83) made in only one piece.

13. A machine as in Claim 12, characterized by the fact that the air contained in the hollow ring (59, 72, 82, 821, 83) can escape from it when the ring is deformed during work.

14. A machine as in Claim 12, characterized by the fact that the air contained in the hollow ring (59, 72, 82, 821, 83) cannot escape from it.

15. A machine as in Claim 12, characterized by the fact that the hollow ring (59, 72, 82, 821, 83) is inflatable.

16. A machine as in one of the Claims 5, 6, 7, 10, 11, 12, 13, 14 or 15, characterized by the fact that the sidefaces of the hollow deformable envelope (30) have a shape such that the whole outer area of the deformable envelope (30) has substantially the same flexibility.

17. A machine as in Claim 16, characterized by the fact that the sidefaces of the deformable envelope (30) include at least one groove (60).

18. A machine as in one of the Claims 1 to 7 or 12 to 17, characterized by the fact that the roller (2) is composed of a plurality of modules (61, 62, 73, 74), each including a crown (290, 291, 292) of projections (25) and a bearing surface (65, 66, 76) which supports the deformable envelope (30).

19. A machine as in Claim 18, characterized by the fact that each bearing surface (76) on a module (74) is situated at one side of the crown (292) of projections (25).

20. A machine as in Claim 18, characterized by the fact that a module (61) includes a bearing surface (65, 66) on each side of the crown (290) of projections (25).

21. A machine as in one of the Claims 18 to 20, characterized by the fact that a module (74) is centred in one of the modules (73, 74) next to it.

22. A machine as in one of the Claims 18 to 21, characterized by the fact that the several modules (61, 62, 73, 74) are mounted on at least one support (69, 78).

23. A machine as in Claim 22, characterized by the fact that the bearing surfaces are composed of a plurality of tubes (76) through which pass the supports (78).

24. A machine as in one of the Claims 18 to 23, characterized by the fact that the modules (61, 62, 73, 74) are pressed against one another by pressure members such as the end modules (62, 73).

25. A machine as in one of the Claims 1 to 7 or 12 to 17, characterized by the fact that the central core (24) has a form which enables crowns (294, 295, 296, 297) of projections (25) to be slid over the said central core (24) and to be connected in rotation to the latter.

26. A machine as in Claim 25, characterized by the fact that the crowns (293, 294, 296, 297) of projections (25) and the deformable envelopes (30) extending between these crowns (293, 294) are pushed against one another.

27. A machine as in Claim 26, characterized by the fact that the deformable envelopes (30) and the crowns (294, 296) of projections (25) are pushed against one another by pressure members such as the end crowns (293, 297) of projections (25).

28. A machine as in one of the preceding Claims, characterized by the fact that the envelope (30) is to a certain extend connected in rotation to the central core (24).

29. A machine as in Claims 28 and 25, characterized by the fact that a crown (295) of projections (25) and an envelope (30) form part of one and the same ring (83).

30. A machine as in Claim 29, characterized by the fact that the crowns (295) are made at least partially of harder material than the rest of the envelope (30).

31. A machine as in one of the Claims 29 or 30, characterized by the fact that the rings (83) are pressed against one another by means of pressure members such as end discs (86).

32. A machine as in Claim 26, 27 or 31, characterized by the fact that spacers (84, 841) extend between two adjacent crowns (293, 294, 295, 296 or 297) of projections (25) in order to determine the distance between the said crowns.

33. A machine as in Claim 32, characterized by the fact that the spacers (84) are embedded in the deformable envelope (30).

34. A machine as in Claim 32 or 33, characterized by the fact that connector means (93, 94 ; 931, 941) keep the spacers (841) in place independently of the presence of the deformable envelopes (30).

35. A machine as in Claim 34, characterized by the fact that the said connector means (93, 94 ; 931, 941) are arranged between the spacers (841) and the crowns (296) or the pressure members (297) and connect these spacers (841) to these crowns (296) or these pressure members (297).

36. A machine as in Claim 35, characterized by the fact that the said connector means (931, 941) consist of cavities (931) arranged in the crowns (296) and the pressure members (297), into each of which penetrates one spacer (841).

37. A machine as in Claim 36, characterized by the fact that the size of the cavities (931) in such that the play between the portion (92) of the spacer (841) which penetrates into it and the said cavity (931) is not too great.

38. A machine as in Claim 35, characterized by the fact that the said connector means (93, 94) consist of a circular cavity (93) which extends substantially concentrically with the bore arranged in the crowns (296) and in the pressure members (297), these bores enabling mounting of the said crowns (296) and the said pressure members (297) upon the central core (24).

39. A machine as in one of the Claims 34 to 38, characterized by the fact that the deformable envelopes (30) include seats (91) in which extend the spacers (841), the structure of these seats (91) being such that the spacers (841) may be easily withdrawn.

40. A machine as in Claim 39, characterized by the fact that the structure of the seats (91) is such that the spacers (841) may be introduced into the said seats (91) after realization of the deformable envelopes (30).

41. A machine as in one of the Claims 24 or 32 to 40, characterized by the fact that after assembly the distance between two adjacent crowns (290, 291, 292, 293, 294, 295, 296, 297) of projections (25) is substantially equal to the free width of the deformable envelope (30).

42. A machine as in Claim 41, characterized by the fact that the distance between two adjacent crowns (290, 291, 292, 293, 294, 295, 296, 297) is slightly less than the free width of the deformable envelope (30).

43. A machine as in one of the Claims 24, 27 or 31, characterized by the fact that the pressure members (297) which are mounted on the central core (24) of the roller (2) by means of clamping members (85), include protective members (95) for the clamping members (85).

44. A machine as in one of the preceding Claims, characterized by the fact that the edge of the scraper element (38) which extends into the vicinity of the envelope (30) is rounded.

45. A machine as in one of the preceding Claims, characterized by the fact that the edge of the scraper element (38) which extends into the vicinity of the envelope (30) is wider than the rest of the scraper element.

46. A machine as in one of the preceding Claims, characterized by the fact that the edge of the scraper element (38) which extends into the vicinity of the envelope (30) extends as far as into the angle made by the envelope (30) with the crowns of projections (25).

47. A machine as in one of the preceding Claims, characterized by the fact that the position of the scraper element (38) may be adjusted with respect to the envelope (30).

**Patentansprüche**

1. Landmaschine zur Bearbeitung des Bodens (1) mit einer Walze (2), die einen Zentralkörper (24) aufweist, der mit nach aussen gerichteten Zähnen (25) ausgestattet ist, die in Kränzen (29, 290, 291, 292, 293, 294, 295, 296, 297) angeordnet sind, zwischen welchen Abstreifer (34) angeordnet sind, dadurch gekennzeichnet, dass der Zentralkörper (24) zwischen zwei benachbarten Kränzen (29, 290, 291, 292, 293, 294, 295, 296, 297) von Zähnen (25) eine deformierbare Hülle (30) aufweist.

2. Maschine nach Anspruch 1, dadurch gekennzeichnet, dass der äussere Umfang der deformierbaren Hülle (30) im wesentlichen kreisförmig ist.

3. Maschine nach Anspruch 1 oder 2, dadurch gekennzeichnet, dass die äussere Umfangsfläche der deformierbaren Hülle (30) im wesentlichen zylindrisch ist.

4. Maschine nach einem der Ansprüche 1 bis 3, dadurch gekennzeichnet, dass die deformierbare Hülle (30) voll ist.

5. Maschine nach einem der Ansprüche 1 bis 3, dadurch gekennzeichnet, dass die deformierbare Hülle (30) hohl ist.

6. Maschine nach einem der Ansprüche 4 oder 5, dadurch gekennzeichnet, dass die deformierbare Hülle (30) von zumindest einer elastischen Bandage gebildet ist, die den Zentralkörper (24) umgibt.

7. Maschine nach Anspruch 6, dadurch gekennzeichnet, dass die elastische Bandage (46) den Zentralkörper (24) mit einem gewissen Druck umgibt.

8. Maschine nach Anspruch 4, dadurch gekennzeichnet, dass die deformierbare Hülle (30) zumindest ein geschmeidiges Band (43) umfasst, das um den Zentralkörper (24) gewickelt ist.

9. Maschine nach Anspruch 4, dadurch gekennzeichnet, dass die deformierbare Hülle (30) eine elastische Schnur (45) umfasst, die um den Zentralkörper (24), vorzugsweise in mehreren Lagen um den Zentralkörper (24), gewickelt ist.

10. Maschine nach Anspruch 4 oder 5, dadurch gekennzeichnet, dass die deformierbare Hülle (30) ein ein geteiltes gekrümmtes Organ (47) oder mehrere gekrümmte Organe, die den Zentralkörper (24) aneinanderstoßend umgeben, umfasst.

11. Maschine nach einem der Ansprüche 8, 9 oder 10, dadurch gekennzeichnet, daß das geschmeidige Band (43), die elastische Schnur (45), das geteilte gekrümmte Organ (47) oder die aneinanderstoßenden gekrümmten Organe vorzugsweise unter einem gewissen Druck von mindestens einem elastischen Ring (44) gehalten werden, nachdem sie um den Zentralkörper (24) gelegt wurden.

12. Maschine nach Anspruch 5, dadurch gekennzeichnet, daß die deformierbare Hülle (30) aus einem zu einem Ring (59, 72, 82, 821, 83) geformten, einstückig ausgeführten, geschlossenen Hohlkörper besteht.

13. Maschine nach Anspruch 12, dadurch gekennzeichnet, daß die im hohlen Ring (59, 72, 82, 821, 83) enthaltene Luft entweichen kann, wenn der Ring während der Arbeit deformiert wird.

14. Maschine nach Anspruch 12, dadurch gekennzeichnet, daß die im hohlen Ring (59, 72, 82, 821, 83) enthaltene Luft nicht entweichen kann.

15. Maschine nach Anspruch 12, dadurch gekennzeichnet, daß der hohle Ring (59, 72, 82, 821, 83) aufblasbar ist.

16. Maschine nach einem der Ansprüche 5, 6, 7, 10, 11, 12, 13, 14 oder 15, dadurch gekennzeichnet, daß die Seitenflächen der hohlen deformierbaren Hülle (30) eine solche Form haben, daß die gesamte Außenfläche der deformierbaren Hülle (30) im wesentlichen die gleiche Nachgiebigkeit hat.

17. Maschine nach Anspruch 16, dadurch gekennzeichnet, daß die Seitenflächen der deformierbaren Hülle (30) zumindest eine Einschnürung (60) aufweisen.

18. Maschine nach einem der Ansprüche 1 bis 7 oder 12 bis 17, dadurch gekennzeichnet, daß die Walze (2) aus mehreren Modulen (61, 62, 73, 74) zusammengesetzt ist, die einen Kranz (290, 291, 292) von Zähnen (25) und eine Auflagefläche (65, 66, 76) umfassen, die die deformierbare Hülle (30) trägt.

19. Maschine nach Anspruch 18, dadurch gekennzeichnet, daß sich jede Auflagefläche (76) eines Moduls (74) auf einer Seite des Kranzes (292) mit Zähnen (25) befindet.

20. Maschine nach Anspruch 18, dadurch gekennzeichnet, daß ein Modul (61) je eine Auflagefläche (65, 66) an den beiden Seiten des Kranzes (290) mit Zähnen (25) umfaßt.

21. Maschine nach einem der Ansprüche 18 bis 20, dadurch gekennzeichnet, daß ein Modul (74) in einem seiner benachbarten Module (73, 74) zentriert ist.

22. Maschine nach einem der Ansprüche 18 bis 21, dadurch gekennzeichnet, daß die verschiedenen Module (61, 62, 73, 74) auf zumindest einem Träger (69, 78) montiert sind.

23. Maschine nach Anspruch 22, dadurch gekennzeichnet, daß sich die Auflageflächen aus mehreren Rohren (76) zusammensetzen, die die Träger (78) durchsetzen.

24. Maschine nach einem der Ansprüche 18 bis 23, dadurch gekennzeichnet, daß die Module (61, 62, 73, 74) durch Spannorgane, z. B. die Endmodule (62, 73), aneinandergepreßt sind.

25. Maschine nach einem der Ansprüche 1 bis 7 oder 12 bis 17, dadurch gekennzeichnet, daß der Zentralkörper (24) eine Form hat, die es ermöglicht, daß die Kränze (294, 295, 296, 297) mit Zähnen (25) auf dem Zentralkörper (24) gleiten und mit dem Zentralkörper (25) drehbar verbunden sein können.

26. Maschine nach Anspruch 25, dadurch gekennzeichnet, daß die Kränze (293, 294, 296, 297) mit Zähnen (25) und die sich zwischen diesen Kränzen (293, 294) erstreckenden deformierbaren Hüllen (30) aneinandergeschoben sind.

27. Maschine nach Anspruch 26, dadurch gekennzeichnet, daß die deformierbaren Hüllen (30) und die Kränze (294, 296) mit Zähnen (25) durch Spannorgane, z. B. die äußeren Kränze (293, 297) mit Zähnen (25), aneinandergeschoben sind.

28. Maschine nach einem der vorhergehenden Ansprüche, dadurch gekennzeichnet, daß die Hülle (30) in einer gewissen Drehverbindung mit dem Zentralkörper (24) ist.

29. Maschine nach den Ansprüchen 28 und 25, dadurch gekennzeichnet, daß ein Kranz (295) mit Zähnen (25) und eine Hülle (30) einen Teil ein und desselben Rings (83) bilden.

30. Maschine nach Anspruch 29, dadurch gekennzeichnet, daß die Kränze (295) zumindest teilweise aus einem härteren Material als der Rest der Hülle (30) ausgeführt sind.

31. Maschine nach einem der Ansprüche 29 oder 30, dadurch gekennzeichnet, daß die Ringe (83) mittels Spannorganen, z. B. Endscheiben (86), zusammengepreßt sind.

32. Maschine nach Anspruch 26, 27 oder 31, dadurch gekennzeichnet, daß sich Distanzstücke (84, 841) zwischen zwei benachbarten Kränzen (293, 294, 295, 296 oder 297) mit Zähnen (25) befinden, um den Abstand zwischen diesen Kränzen festzulegen.

33. Maschine nach Anspruch 32, dadurch gekennzeichnet, daß die Distanzstücke (84) in der deformierbaren Hülle (30) eingesetzt sind.

34. Maschine nach Anspruch 32 oder 33, dadurch gekennzeichnet, daß Verbindungselemente (93, 94 ; 931, 941) die Distanzstücke (841) ortsfest halten, unabhängig von der Anwesenheit der deformierbaren Hüllen (30).

35. Maschine nach Anspruch 34, dadurch gekennzeichnet, daß die Verbindungselemente (93, 94 ; 931, 941) zwischen den Distanzstücken (841) und den Kränzen (296) oder den Spannorganen (297) angeordnet sind und diese Zwischenstücke (841) mit diesen Kränzen (296) oder diesen Spannorganen (297) verbinden.

36. Maschine nach Anspruch 35, dadurch gekennzeichnet, daß die Verbindungselemente (931, 941) aus in die Kränze (296) und in die Spannelemente (297) eingearbeiteten Vertiefungen (931) bestehen, in welche jeweils ein Zwischenstück (841) eingreift.

37. Maschine nach Anspruch 36, dadurch gekennzeichnet, daß die Dimension der Vertiefungen (931) derart ist, daß das Spiel zwischen dem eingreifenden Teil (92) des Zwischenstücks (841) und der Vertiefung (931) nicht zu groß ist.

38. Maschine nach Anspruch 35, dadurch gekennzeichnet, daß die Verbindungselemente (93, 94) aus einer kreisförmigen Vertiefung (93) bestehen, die im wesentlichen konzentrisch zu der in den Kränzen (296) und den Spannelementen (297) ausgebildeten Bohrung verlaufen, welche Bohrung die Befestigung der Kränze (296) und der Spannorgane (297) auf dem Zentralkörper (24) ermöglichen.

39. Maschine nach einem der Ansprüche 34 bis 38, dadurch gekennzeichnet, daß die deformierbaren Hüllen (30) Aufnahmen (91), in welche die Zwischenstücke (841) einsetzbar sind, aufweisen, wobei diese Aufnahmen (91) derart konstruiert sind, daß die Zwischenstücke (841) leicht entfernt werden können.

40. Maschine nach Anspruch 39, dadurch gekennzeichnet, daß die Aufnahmen (91) derart konstruiert sind, daß die Zwischenstücke (841) in die Aufnahmen (91) eingesetzt werden können, nachdem die deformierbaren Hüllen (30) gebildet sind.

41. Maschine nach einem der Ansprüche 24 oder 32 bis 40, dadurch gekennzeichnet, daß der Abstand nach der Montage zwischen zwei benachbarten Kränzen (290, 291, 292, 293, 294, 295, 296, 297) mit Zähnen (25) im wesentlich gleich der freien Breite der deformierbaren Hülle (30) ist.

42. Maschine nach Anspruch 41, dadurch gekennzeichnet, daß der Abstand zwischen zwei benachbarten Kränzen (290, 291, 292, 293, 294, 295, 296, 297) geringfügig kleiner ist als die freie Breite der deformierbaren Hülle (30).

43. Maschine nach einem der Ansprüche 24, 27 oder 31, dadurch gekennzeichnet, daß die Spannelemente (297), die an dem Zentralkörper (24) der Walze (2) mittels Befestigungsorganen (85) befestigt sind, Schutzelemente (95) für die Befestigungsorgane (85) aufweisen.

44. Maschine nach einem der vorhergehenden Ansprüche, dadurch gekennzeichnet, daß der Rand des Abstreifelements (38) der sich in der Nähe der Hülle (30) erstreckt, abgerundet ist.

45. Maschine nach einem der vorhergehenden Ansprüche, dadurch gekennzeichnet, daß der Rand des Abstreifelements (38), der sich in der Nähe der Hülle (30) erstreckt, breiter als der Rest des Abstreifelements ist.

46. Maschine nach einem der vorhergehenden Ansprüche, dadurch gekennzeichnet, daß der Rand des Abstreifelements (38), der sich in der Nähe der Hülle (30) erstreckt, bis in den zwischen der Hülle (30) und den Kränzen mit Zähnen (25) gebildeten Winkel ragt.

47. Maschine nach einem der vorhergehenden Ansprüche, dadurch gekennzeichnet, daß die Lage des Abstreifelements (38) in bezug auf die Hülle (30) verstellt werden kann.

FIG.1
1
2
3
4
5
6
7
8
8
9
10
11
12
13
14
15
16
17
18
19
20
21
22
23
24
25
25
26
27
28
29
30
31
32
33
34
35
36
37
38
39
40
41

FIG.4
FIG.3
FIG.2
21
42
46
30
29
24
45
44
43

FIG. 6

FIG. 5

29
38
44
53
54
47
VI
30
VI
24
52
29

FIG.8
FIG.7
VII
VIII
25
30
59
64
65
68
63
67
69
61
290
60
24
66
62
71
70

FIG.10
IX
25
72
77
78
76
21
292
FIG.9
X
292
60
72
74
76
78
24
30
291
79
75
73
21

FIG.11
FIG.12
FIG.13
FIG.14
293
294
295
21
24
25
30
80
81
82
83
84
85
86
294'
294''
294'''
XI
XII
XIII
XIV

FIG 15
21
95
297
85
90
821
81
80
841
30
296
XVI
87
XVII
XVIII
28
27
94,941
92
93,931
88
24
89
2

FIG 16

FIG. 17

XV

296'''
296''
296'
296
89
88
91
841
821
87
81
93
841
81
21
88
24
25
80
25
81
841
296
841
91
94
91
88
XV

FIG. 19

FIG. 18

296
30
94,941
94,941
30
93,931
93,931
841
92
24
92
841

296
841
941
92
931
24
XIX